# EUROPÄISCHE PATENTSCHRIFT

(11) **EP 1 947 271 B1**
(45) Veröffentlichungstag und Bekanntmachung des Hinweises auf die Patenterteilung: **05.08.2009**
(21) Anmeldenummer: 07024364.7
(22) Anmeldetag: 17.12.2007
(51) Int. Cl.: E05B 15/02

(54) **Anordnung mit einem Verriegelungs-Element für einen Verriegelungshaken**
Assembly with a locking element for a latch hook
Agencement doté d'un élément de verrouillage pour un crochet de verrouillage

(30) Priorität: 20.12.2006 DE 202006019165 U
(43) Veröffentlichungstag der Anmeldung: 23.07.2008
(73) Patentinhaber: S-Fasteners GmbH, 71106 Magstadt (DE)
(72) Erfinder: Homner, Bernhard, 75365 Calw-Stammheim (DE)
(74) Vertreter: Blutke, Klaus Wilhelm

(56) Entgegenhaltungen:
- DE-A1- 10 355 780
- DE-A1- 19 943 083
- DE-U1- 8 710 288
- DE-U1- 29 808 914

## Beschreibung

Die Erfindung bezieht sich auf mechanische Verriegelungsanordnungen, bei denen ein Verriegelungshaken im Verriegelungsfall ein Verriegelungs-Element entsprechend umgreift.

Derartige Verriegelungsanordnungen sind z.B. im deutschen Gebrauchsmuster Nr. 298 08 914.9 beschrieben, welche u.a. als Verschlüsse für Gepäckboxen in Flugzeugen geeignet sind.
In diesem Gebrauchsmuster ist eine Verriegelungsanordnung beschrieben, bei der eine mit einem Behälter verbundene Verschlußnase vom Hakenteil eines mit einem schwenkbaren Deckel verbundenen Verriegelungshakens verriegelnd umfaßt werden kann.

Solche Verschlüsse unterliegen besonders im Flugzeugbau hohen Anforderungen; sie müssen höchsten Belastungen standhalten, ein geringes Gewicht und geringe Abmessungen aufweisen und bestimmten räumlichen Konstruktionsvorgaben genügen.

Es ist Aufgabe der Erfindung, eine verbesserte Anordnung mit Verriegelungs-Element (für einen Verriegelungshaken) vorzusehen.
Eine solche verbesserte Anordnung soll insbesondere einer höchsten Belastbarkeit genügen , ein geringes Gewicht aufweisen und aus Raumgründen soll die Verriegelung an der oder nahe der zum Verriegelungshaken weisenden Frontseite der das Verriegelungselement umfassenden Anordnung erfolgen.

Desweiteren soll die verbesserte Anordnung eine Möglichkeit vorsehen, unterschiedliche Abstände zwischen Verriegelungs-Element und Verriegelungshaken bei der Montage auszugleichen.

Diese Aufgabe der Erfindung wird in vorteilhafter Weise durch die im kennzeichnenden Teil des Anspruches 1, 2 und 10 genannten Merkmale gelöst.

Vorteilhafte Weiterbildungen der Erfindung sind in den Unteransprüchen gekennzeichnet.

Ausführungsbeispiele der Erfindung sind in den Zeichnungen dargestellt und werden im folgenden näher beschrieben.

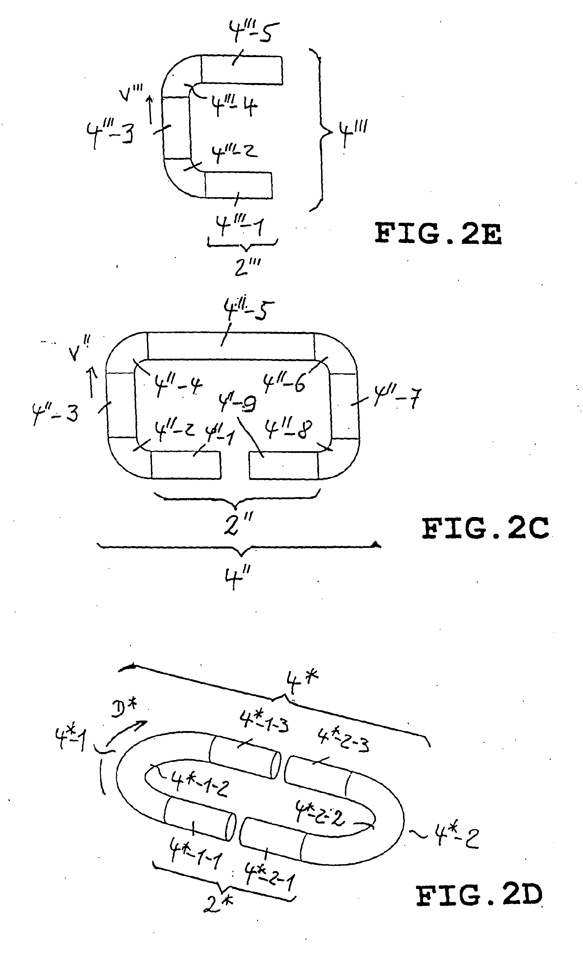

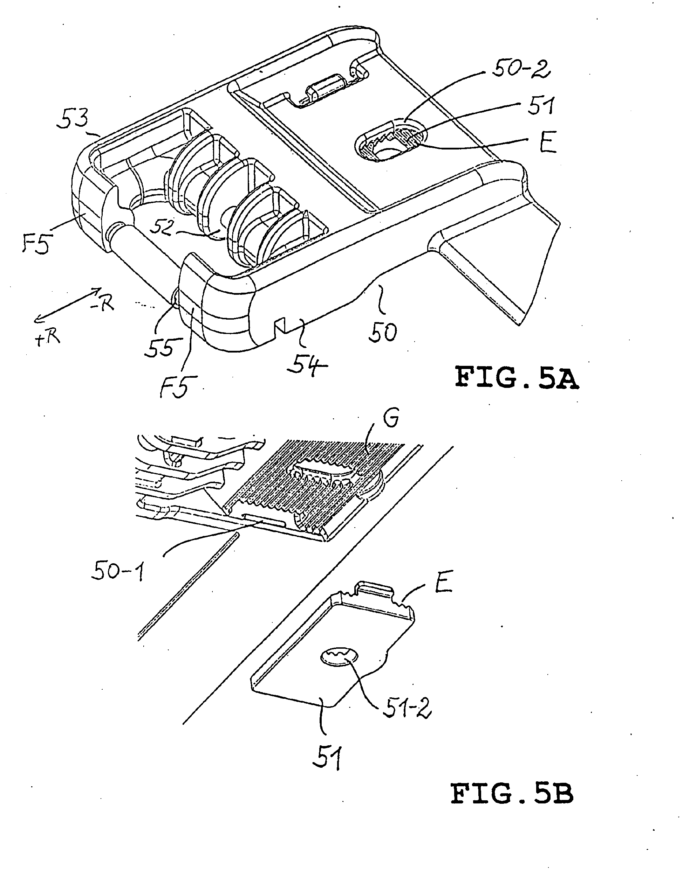

Es zeigen:
FIG.1 A
   eine schematische perspektivische auseinandergezogene Darstellung eines Verriegelungshakens (mit Schwenkachse) und der erfindungsgemäßen Anordnung mit einem Verriegelungs-Element (in Außenansicht);
FIG.1 B
   eine schematische perspektivische Darstellung der erfindungsgemäßen Anordnung mit einem strangartigen Körper ovalartigen Verlaufs , der in zwei gedachte Bereiche aufgeteilt ist, von denen der eine Bereich als Verriegelungselement dient und der andere Bereich in einen Kunststoffkörper eingebettet ist;
FIG. 1C
   eine Schnittdarstellung des Verriegelungshakens und des Verriegelungselementes in Verriegelungsposition.
FIG.2A, 2B, 2C, 2D, 2E
   perspektivische Darstellungen verschiedener Ausführungsformen eines einteiligen strangartigen Körpers und einer zweiteiligen strangartigen Körperanordnung für die erfindungsgemäße Anordnung :
FIG. 2A
   einteiliger ovaler geschlossener strangartiger Körper,
   wobei das Verriegelungselement von einem Abschnitt des strangartigen Körpers gebildet wird und der übrige Bereich des strangartigen Körpers für die Einbettung in den Kunststoffkörper bestimmt ist;
FIG.2B
   einteiliger kreisringförmiger strangartiger Körper mit offenen Enden,
   wobei das Verriegelungselement von einem Abschnitt des strangartigen Körpers gebildet wird und der übrige Bereich des strangartigen Körpers für die Einbettung in den Kunststoffkörper bestimmt ist;
FIG.2C
   einteiliger rechteckförmigähnlicher strangartiger Körper mit offenen Enden,
   wobei die Verriegelungselement von den beiden Endbereichen des strangartigen Körpers gebildet wird und der übrige Bereich des strangartigen Körpers für die Einbettung in den Kunststoffkörper bestimmt ist;
FIG.2D
   zweigeteilige strangartige Körperanordnung, bestehend aus zwei gleichen Teilen U-förmigen Verlaufs , die derart angeordnet sind, daß das Verriegelungs-Element von den Endbereichen zweier aufeinander ausgerichteter U-Schenkel beider Teile gebildet wird und wobei die übrigen Bereiche beider Teile für die Einbettung in den Kunststoffkörper bestimmt sind;
FIG.2E
   einteiliger U förmig ausgebildeter strangartiger Körper,
   wobei das Verriegelungselement von dem (frei in die Aussparung des Kunststoffkörpers ragenden) Endbereich eines U-Schenkels gebildet wird und der übrige Bereich des strangartigen Körpers für die Einbettung in den Kunststoffkörper bestimmt ist;
FIG.3
   eine schematische perspektivische Darstellung der erfindungsgemäßen Anordnung mit strangartigen Körper gemäß FIG. 2D, wobei das Verriegelungs-Element Teile des strangartigen Körpers und eine diese umfassende Rollhülse umfaßt;
FIG.4
   eine perspektivische Darstellung der Rollhülse;
FIG.5A
   eine auszugsweise perspektivische Darstellung einer erfindungsgemäßen Anordnung mit Rasteinstellung für eine auswählbare Rastposition;
FIG. 5B
   eine auszugsweise perspektivische Darstellung der Anordnung gemäß FIG. 5A mit Blick auf deren Unterseite und mit Blick auf ein vom Kunststoffkörper herausgelöst dargestelltes Rast-Element.

Verriegelungsanordnungen der eingangs erwähnten Art dienen z.B. dazu, einen Behälter mit einem schwenkbaren Behälter-Deckel zu verschließen.
Hierzu ist am Behälterdeckel ein schwenkbarer Verriegelungshaken und am Behälter ein Verriegelungs-Element angeordnet, welches im Verriegelungsfall vom Hakenteil des Verriegelungshakens ausreichend umfaßt wird. Gegenstand der Erfindung ist eine besonders gestaltete Anordnung mit einem Verriegelungs-Element als Teil eines strangartigen Körpers, der überwiegend in einem Kunststoffkörper eingebettet ist.

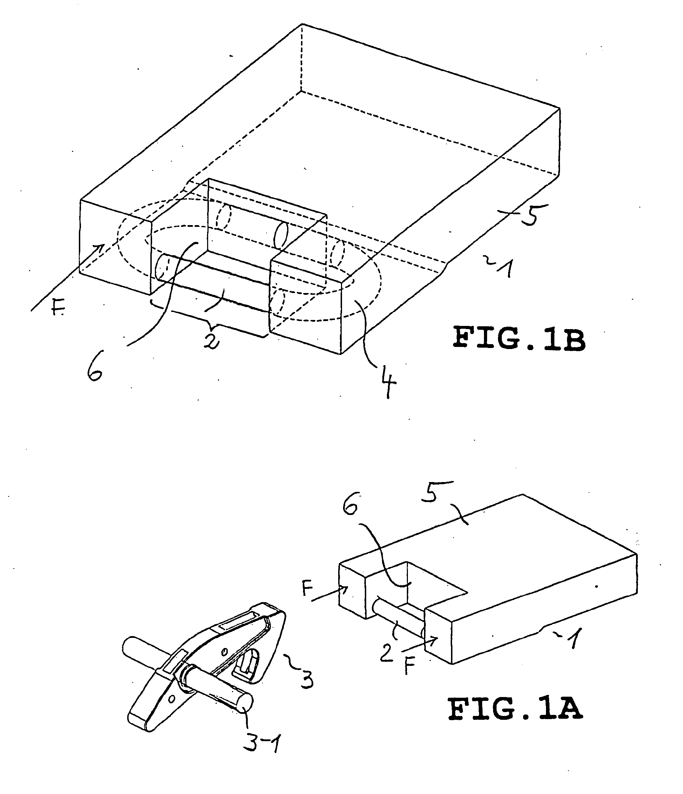

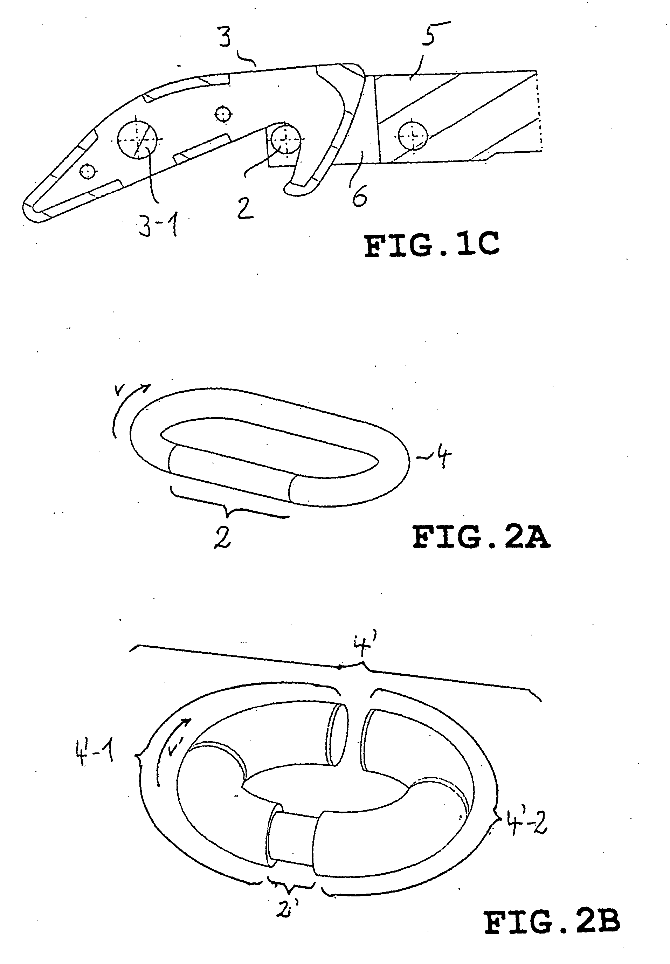

FIG.1A zeigt
eine schematische perspektivische auseinandergezogene Darstellung eines Verriegelungshakens 3 (mit Schwenkachse 3-1) und der erfindungsgemäßen Anordnung 1, bestehend aus einem schematisch dargestellten Kunststoffkörper 5 mit einem Verriegelungs-Element 2 (in AuBenansicht).
Das Hakenteil des Verriegelungshakens 3 umfaßt (zwar nicht vollends, aber für eine Verriegelung ausreichend) nach entsprechender Schwenkung des Verriegelungshakens das Verriegelungs-Element 2.
Die dem Verriegelungshaken 3 zugewandte Frontseite des Kunststoffkörpers 5 ist mit F gekennzeichnet.
Der Kunststoffkörper 5 weist an seiner Frontseite F eine Aussparung 6 auf, in welcher die das Verriegelungs-Element 2 angeordnet ist. Die Aussparung 6 ist groß genug, um einen Zugriff des Hakenteils des Verriegelungshakens auf das Verriegelungs-Element bzw. um ein Lösen des Hakenteils vom Verriegelungs-Element zu gestatten.
Die konstruktive Forderung, daß das Verriegelungs-Element 2 ( als Teil eines strangartigen Körpers 4 (s. FIG. 1B und FIG. 2A)) aus Raumgründen an oder nahe der (dem gedachten Verriegelungshaken zugewandten) Frontseite F des Kunststoffkörpers angeordnet sein muß,
erfordert - unter Berücksichtigung der hohen Belastungen, denen das Verriegelungs-Element ausgesetzt ist- eine sichere Befestigung des strangartigen Körpers 4 im Kunststoffkörper 5.

Aus diesem Grunde ist der strangartige Körper 4 außerhalb seines als Verriegelungs-Element wirkenden Bereiches in besonderer Weise ausgebildet und überwiegend in den Kunststoffkörper 5 eingegossen.

FIG. 1B zeigt
eine schematische perspektivische Darstellung der erfindungsgemäßen Anordnung 1 mit einem strangartigen Körper 4 ovalartigen Verlaufs kreisförmigen Querschnitts , der in zwei gedachte Bereiche aufgeteilt ist, von denen der eine Bereich als Verriegelungs-Element 2 dient und der verbleibende Bereich in den Kunststoffkörper 5 eingebettet ist.

FIG. 1C zeigt
eine Schnittdarstellung des Verriegelungshakens 3 mit Schwenkachse 3-1 und des Verriegelungselementes 2 in Verriegelungsposition. Das Verriegelungs-Element 2 ist in der Aussparung 6 des Kunststoffkörpers 5 angeordnet.

Die FIG.2A, 2B, 2C, 2D und 2E zeigen
perspektivische Darstellungen verschiedener Ausführungsformen eines einteiligen strangartigen Körpers und einer zweiteiligen strangartigen Körperanordnung für die erfindungsgemäße Anordnung :
Wichtig für eine sichere Befestigung des strangartigen Körpers 4 im Kunststoffkörper 5 sind insbesondere jene Bereiche, welche eine sich von der Frontseite (F) entfernende in das Innere des Kunststoffkörpers (5) hinein weisende Verlaufsrichtung (v) aufweisen und jene, die im Innern des Kunststoffkörpers möglichst parallel zum Verriegelungs-Element verlaufen.

Das Verriegelungs-Element ist vorzugsweise aus Stahl geferigt und kann einen geradlinigen oder bogenförmigen Verlauf aufweisen.

FIG. 2A zeigt
einen einteiligen ovalen und geschlossenen strangartigen Körper 4 gemäß FIG. 1B. Das Verriegelungselement 2 wird von einem Abschnitt des strangartigen Körpers gebildet, dessen übriger Bereich für die Einbettung in den Kunststoffkörper 5 bestimmt ist.

FIG.2B zeigt
einen einteiligen kreisringförmiger strangartiger Körper 4' mit offenen Enden. Das Verriegelungselement 2' wird von einem Abschnitt des strangartigen Körpers gebildet; der übrige Bereich des strangartigen Körpers ist für die Einbettung in den Kunststoffkörper bestimmt.

FIG.2C zeigt
einen einteiligen rechteckförmigähnlichen strangartigen Körper 4" mit offenen Enden. Er weist geradlinige (4"-1, 4"-3, 4"-5, 4"-7 und 4"-9) und bogenförmige (4"-2, 4"-4, 4"-6 und 4"-8) Abschnitte auf. Das Verriegelungselement 2" wird von den beiden Endbereichen 4"-1 und 4"-9 des strangartigen Körpers 4" gebildet; die übrigen Bereiche sind für die Einbettung in den Kunststoffkörper bestimmt ist;

FIG.2E zeigt
einen einteiligen U förmig ausgebildeten strangartigen Körper 4"', welcher geradlinig verlaufende (4"'-1, 4"'-3 und 4"'-5) und bogenförmige Abschnitte (4"'-2 und 4"'-4) aufweist.
Das Verriegelungs-Element 2"' wird von dem Endbereich 4"'-1 gebildet, der als Arm mit freiem Ende nur einseitig mit dem Kunststoffkörper verbunden ist; die übrigen Bereiche des strangartigen Körpers 4"' sind für die Einbettung in den Kunststoffkörper bestimmt.

FIG.2D zeigt
eine zweigeteilige strangartige Körperanordnung 4*, bestehend aus zwei gleichen Teilen 4*-1 und 4*-2 U-förmigen Verlaufs.

Jedes Teil besteht aus zwei geradlinig verlaufenden U-Schenkeln (4*-1-1 und 4*-1-3; 4*-2-1 und 4*-2-3) und einer bogenförmigen Basis (4*-1-2; 4*-2-2). Beide Teile sind derart (im Kunststoffkörper) angeordnet, daß das Verriegelungs-Element 2* von den aufeinander ausgerichteten Endbereichen 4*-1-1 und 4*-2-1 beider Teile gebildet wird. Die übrigen Bereiche beider Teile sind für die Einbettung in den Kunststoffkörper bestimmt.

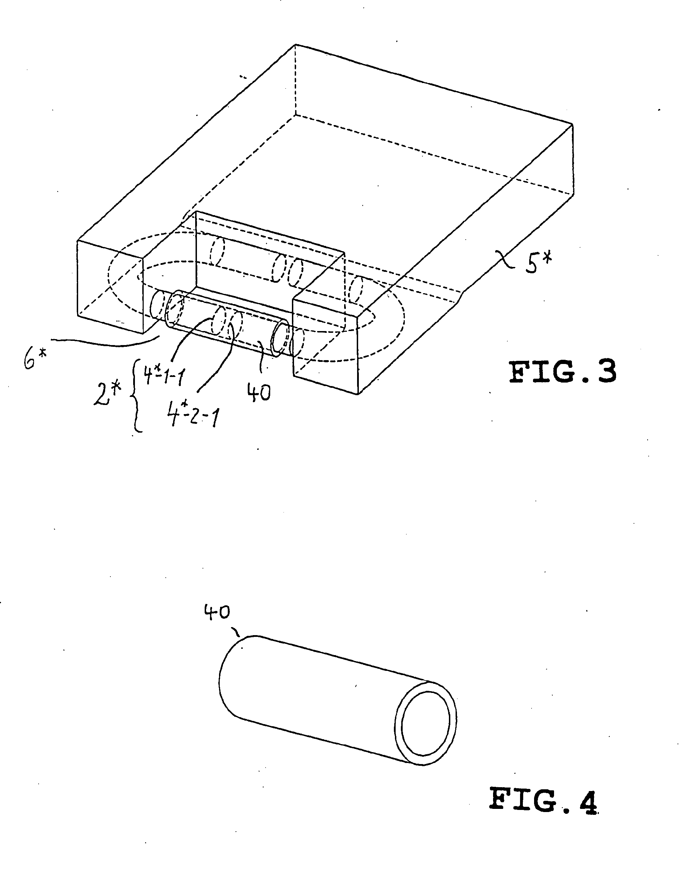

FIG. 3 zeigt
eine schematische perspektivische Darstellung der erfindungsgemäßen Anordnung 1* mit einem strangartigen Körper 4* gemäß FIG. 2D. Das Verriegelungs-Element 2* ist in der Aussparung 6* des Kunststoffkörpers angeordnet. Es besteht aus jeweils einem U-Schenkel der getrennt angeordneten U förmigen Teile 4*1 und 4*-2. Das Verriegelungs-Element wird von einer Rollhülse 40 (s. auch FIG. 4) umfaßt.

FIG.4 zeigt
eine perspektivische Darstellung der Rollhülse 40.

Die Rollhülse ist im Verriegelungsfall vom Hakenteil des gadachten Verriegelungshakens umfaßbar ; sie ist auf dem Verriegelungs-Element 2* drehbar angeordnet. Die Rollhülse ist vorzugsweise innen und außen mit einer Gleitschicht, insbesondere mit einer Graphit oder PTFE (Teflon) enthaltenden Lackschicht, beschichtet.

FIG.5A zeigt
eine auszugsweise perspektivische Darstellung einer erfindungsgemäßen justierbare Anordnung mit Rasteinstellung für eine auswählbare Rastposition und
FIG. 5B
eine auszugsweise perspektivische Darstellung der Anordnung gemäß FIG. 5A mit Blick auf deren Unterseite und mit Blick auf ein vom Kunststoffkörper 50 herausgelöst dargestelltes Rast-Element 51.

Die justierbare Anordnung umfaßt einen Kunststoffkörper 50, welcher in einer auswählbaren Rastposition in Richtung +R zum gedachten Verriegelungshaken oder entgegengesetzt -R dazu auf einem gedachten Bauteil befestigbar ist.
Der Kunststoffkörper 50 weist nebeneinanderliegende quer zur Richtung +/- R verlaufende Rastrillen G auf.
Im Kunststoffkörper 50 ist ein in Richtung +/- R geführtes Rast-Element 51 anordnungsbar. Seine Führung erfolgt in einem Schlitz 50-1 anschlagsbestimmter Länge und Breite.
Das Rast-Element weist ebenfalls nebeneinanderliegende quer zur Richtung +/- R verlaufende Rastrillen E auf.
Die Rastrillen G, E des Kunststoffkörpers 50 und des Rast-Elementes 51 sind ineinandergreifbar.
Der Kunststoffkörper 50 ist gegenüber dem Rast-Element 51 zur Auswahl einer Rastposition in einem anschlagsbegrenzten Bereich des Schlitzes 50-1 abhebbar bzw. absenkbar und in Richtung +/-R verschiebbar.
Zur Befestigung des Kunststoffkörpers 50 und des Rast-Elementes 51 am gedachten Bauteil ist eine lösbare Schraubverbindung (nicht dargestellt) mit einem Schraubbolzen vorgesehen, bei der der Schraubbolzen durch ein in Richtung +/- R ausgerichtetes Langloch 50-2 im Kunststoffkörper 50 und durch eine darauf ausgerichtete Bohrung 51-2 im Rast-Element 51 verläuft. Bei Einnahme einer ausgewählten Rastposition ist durch den angezogenen (mit dem Bauteil verschraubten) Schraubbolzen ein Abheben des Kunststoffkörpers 50 vom Rast-Element 51 nicht möglich. Die Auswahl einer anderen Rastposition erfordert eine vorübergehende Lockerung des Schraubbolzens zur Einstellung einer neuen Rastposition.
Die außerhalb des Verriegelungs-Elementes liegenden Bereiche des strangartigen Körpers müssen nicht zwangsweise alle in den Kunststoffkörper eingebettet sein; wie aus FIG. 5A ersichtlich, kann auch in einem bestimmten Bereich (z.B. 52) auf eine Einbettung verzichtet werden. Aus Gründen einer sicheren Befestigung sind jedoch die außerhalb des Verriegelungs-Elementes liegenden Bereiche des strangartigen Körpers überwiegend im Kunststoffkörper eingebettet.
Als Material für den Kunststoffkörper kann vorzugsweise Polyetherimid verwendet werden.
Der Kunststoffkörper 50 weist zwei voneinander beabstandete Vorsprünge 53,54 auf, zwischen deren Enden das Verriegelungs-Element 55 angeordnet ist. Für diese Ausführungsform wird die Frontfläche F5 des Kunststoffkörpers von den Außenflächen der nach innen weisenden Teilen 56 und 57 der Vorsprünge gebildet.

## Patentansprüche

1. Anordnung mit einem Verriegelungs-Element
für eine gedachte mechanische Verriegelungsanordnung bestehend aus dem Verriegelungs-Element und aus einem Verriegelungshaken, dessen Hakenteil mit dem Verriegelungs-Element verriegelnd verbindbar ist,
**dadurch gekennzeichnet,**
**daß** ein einteiliger strangartiger Körper (4; 4'; 4''; 4''') vorgesehen ist, der aus bogenförmig (4;4'-1, 4'-2; 4''-2, 4''-4; 4''-6, 4''-8; 4'''-2, 4'''- 4) verlaufenden und/oder geradlinig ( 2'; 4''-1, 4''-3; 4''-5, 4''-7, 4''-9) verlaufenden Bereichen besteht,
**daß** das Verriegelungselement von einem Abschnitt (2, 2', 2'', 2''') oder von den beiden Endbereichen 4''-1, 4''-9) des strangartigen Körpers (4, 4', 4'', 4''') gebildet wird,
**daß** ein Kunststoffkörper (5) vorgesehen ist mit einer Aussparung (6) an seiner dem gedachten Verriegelungshaken (3) zugewandten Frontseite (F) ,
**daß** das Verriegelungselement (2, 2', 2'', 2''') für die Hakenverriegelung in der Aussparung (6) des
Kunststoffkörpers (5) an oder nahe seiner Frontseite (F) angeordnet ist,
**daß** die außerhalb des Verriegelungs-Elementes (2, 2', 2'', 2''') liegenden Bereiche des strangartigen Körpers (4, 4', 4'', 4''') überwiegend im Kunststoffkörper (5) eingebettet sind,
wobei mindestens einer dieser eingebetteten Bereiche (4'-1, 4'-2; 4''-3, 4''-7; 4'''-3) eine sich von der Frontseite (F) entfernende in das Innere des Kunststoffkörpers (5) hinein weisende Verlaufsrichtung (V; V'; V''; V''') aufweist,
und **daß** die Aussparung (6) groß genug ist für einen Zugriff des Hakenteils des Verriegelungshakens (3) auf das Verriegelungselement (2, 2', 2'', 2''').

2. Anordnung mit einem Verriegelungs-Element
für eine gedachte mechanische Viegelungsanordnung bestehend aus dem Verriegelungs-Element und aus einem Verriegelungshaken, dessen Hakenteil mit dem Verriegelungs-Element verriegelnd verbindbar ist,
**dadurch gekennzeichnet,**
**daß** eine zweiteilige strangartige Körperanordnung (4*) vorgesehen ist, bei der jedes Teil (4*-1, 4*-2) aus bogenförmig verlaufenden (4*-1-2; 4*-2-2 ) und/oder geradlinig verlaufenden (4*-1-1; 4*-1-3; 4*-2-1; 4*-2-3) Bereichen besteht,
**daß** das Verriegelungs-Element(2*) von jeweils einem Abschnitt ( 4*-1-1, 4*-2-1) des Endbereiches beider Teile (4*-1, 4*-2) der strangartigen Körperanordnung (4*) gebildet wird,
**daß** ein Kunststoffkörper (5) vorgesehen ist mit einer Aussparung (6) an seiner dem Verriegelungshaken zugewandten Frontseite (F),
**daß** das Verriegelungs-Element (2*) für die Hakenverriegelung in der Aussparung (6) des Kunststoffkörpers (5) an oder nahe seiner Frontseite (F) angeordnet ist,
**daß** die außerhalb der Verriegelungselement-Anordnung (2*) liegenden Bereiche beider Teile überwiegend im Kunststoffkörper eingebettet sind,
wobei mindestens einer dieser Bereiche ( 4*-1-2;
4*-2-2) jedes Teils (4*-1, 4*-2) eine sich von der Frontseite F entfernende in das Innere des Kunststoffkörper (5) hinein weisende Verlaufsrichtung D* aufweist,
und **daß** die Aussparung groß genug ist für einen Zugriff des Hakenteils des Verriegelungshakens auf das Verriegelungselement (2*).

3. Anordnung nach Anspruch 1,
**dadurch gekennzeichnet,**
**daß** der einteilige strangartige Körper (4; 4', 4'', 4''') einen geschlossenen oder offenen Verlauf aufweist.

4. Anordnung nach Ansprüche 1 oder 2,
**dadurch gekennzeichnet,**
**daß** die beiden Endbereiche ( 4''-1, 4''-9) des einteiligen strangartigen Körpers 4'' das Verriegelungs-Element 2'' bilden,
oder
**daß** jeweils ein Endbereich (4*-1-1, 4*-2-1) beider Teile (4'-1, 4*-2) der zweiteiligen strangartigen Körperanordnung (4*) das Verriegelungs-Element (2*) bilden.

5. Anordnung nach einem der Ansprüche 1 bis 4,
**dadurch gekennzeichnet,**
**daß** das Verriegelungs-Element einen geradlinigen oder gebogenen Verlauf hat aufweist.

6. Anordnung nach einem der Ansprüche 1 bis 5,
**dadurch gekennzeichnet, daß** der strangartige Körper einen kreisrunden Querschnitt aufweist.

7. Anordnung nach Anspruch 6,
**dadurch gekennzeichnet,**
**daß** für einen strangartigen Körper mit kreisförmigem Querschnitt und geradlinigem Verlauf
das Verriegelungs-Elements (2' , 2'', 2''', 2*) innerhalb einer Hülse (40) angeordnet ist, welche mit dem Hakenteil des Verriegelungshakens verriegelnd verbindbar und auf dem Verriegelungs-Element drehbar angeordnet ist.

8. Anordnung nach Anspruch 7,
**dadurch gekennzeichnet, daß**
die Hülse (40) mit einer Gleitschicht, insbesondere mit einer Graphit oder PTFE (Teflon) enthaltenden Lackschicht, beschichtet ist.

9. Anordnung nach einem der Ansprüche 1 bis 8,
**dadurch gekennzeichnet, daß** der Kunststoffkörper (50) zwei voneinander beabstandete Vorsprünge (53,54) aufweist, zwischen deren Enden das Verriegelungs-Element (55) angeordnet ist.

10. Justierbare Anordnung mit einem Verrriegelungs-Element nach
einem der Ansprüche 1 bis 9,
**dadurch gekennzeichnet, daß**
der Kunststoffkörper (50) in einer auswählbare Rastposition in Richtung (+R) zum gedachten Verriegelungshaken oder entgegengesetzt (-R) dazu auf einem gedachten Bauteil befestigbar ist,
daß der Kunststoffkörper (50) nebeneinanderliegende quer zur Richtung +/- R verlaufende Rastrillen (G) aufweist,
daß im Kunststoffkörper (50) ein in Richtung +/- R geführtes (50-1) Rast-Element (51) anordnungsbar ist,
welches ebenfalls nebeneinanderliegende quer zur Richtung +/-R verlaufende Rastrillen (E) aufweist,
wobei die Rastrillen (G, E) des Kunststoffkörpers (50) und des Rast-Elementes (51) ineinandergreifbar sind,
daß der Kunststoffkörper (50) gegenüber diesem Rast-Element (51) zur Auswahl einer Rastposition in einem anschlagsbegrenzten Bereich (50-1) abhebbar bzw. absenkbar und in Richtung +/- R verschiebbar ist.

11. Anordnung nach Anspruch 10,
**dadurch gekennzeichnet,**
**daß** zur Befestigung des Kunststoffkörpers (50) und des Rast-Elementes (51) am gedachten Bauteil eine lösbare Schraubverbindung mit einem Schraubbolzen vorgesehen ist,
wobei der Schraubbolzen durch ein in Richtung +/- R ausgerichtetes Langloch (50-2) im Kunststoffkörper (50) und durch eine darauf ausgerichtete Bohrung (51-2) im Rast-Element (51) verläuft ,
und **daß** bei Einnahme einer ausgewählten Rastposition durch den angezogenen Schraubbolzen ein Abheben des Kunststoffkörpers (50) vom Rast-Element (51) verhinderbar ist.

## Claims

1. Arrangement with a locking element for an imaginary mechanical locking arrangement, consisting of the locking element and a locking hook, the hooked part of which connects with the locking element to close the lock,
**characterised in**
**that** a single-part elongated body (4; 4'; 4''; 4''') is provided which consists of curved parts (4;4'-1, 4'-2; 4''-2, 4''-4; 4''-6, 4''-8; 4'''-2, 4'''-4) and/or straight parts (2'; 4''-1, 4''-3; 4''-5, 4''-7, 4''-9),
**that** the locking element is formed by one section (2, 2', 2'', 2''') or by both end parts (4''-1, 4''-9) of the elongated body (4, 4', 4'', 4'''),
**that** a plastic body (5) is provided with a recess (6) on its front side (F) facing the imaginary locking hook (3),
**that** the locking element (2, 2', 2'', 2''') for the hook lock is located in the recess (6) of the plastic body (5) on or near its front side (F),
**that** the parts of the elongated body (4, 4', 4'', 4''') beyond the locking element (2, 2', 2'', 2''') are, for the most part, embedded in the plastic body (5),
where the direction (V; V'; V''; V''') of at least one of these embedded parts (4'-1, 4'-2; 4''-3, 4''-7; 4'''-3) is away from the front side (F) and towards the interior of the plastic body (5),
and the recess (6) is large enough to allow the hooked part of the locking hook (3) to hook over the locking element (2, 2', 2'', 2''').

2. Arrangement with a locking element for an imaginary mechanical locking arrangement, consisting of the locking element and a locking hook, the hooked part of which connects with the locking element to close the lock,
**characterised in**
**that** a two-part elongated body arrangement (4*) is provided,
where each part (4*-1, 4*-2) consists of curved areas (4*-1-2; 4*-2-2) and/or straight areas (4*-1-1; 4*-1-3; 4*-2-1; 4*-2-3),
**that** the locking element (2*) is formed by one section (4*-1-1, 4*-2-1) of the end area of both parts (4*-1, 4*-2) of the elongated body arrangement (4*),
**that** a plastic body (5) is provided with a recess (6) in its front side (F) facing the locking hook,
**that** the locking element (2*) for the hook-type lock is located in the recess (6) of the plastic body (5) in or near its front side (F),
**that** the areas of both parts beyond the locking-element arrangement (2*) are, for the most part, embedded in the plastic body,
where the direction D* of at least one of these areas (4*-1-2; 4*-2-2) of each part (4*-1, 4*-2) is away from the front side F and into the interior of the plastic body (5),
and **that** the recess is large enough to permit the hooked part of the locking hook to engage the locking element (2*).

3. Arrangement according to claim 1
**characterised in**
**that** the single-part elongated body (4; 4', 4'', 4''') is closed or open in shape.

4. Arrangement according to claim 1 or claim 2
**characterised in**
**that** the two end areas (4''-1, 4''-9) of the single-part elongated body 4'' form the locking element 2'',
or
**that** one end area (4*-1-1, 4*-2-1) of each of the parts (4'-1, 4*-2) of the two-part elongated body arrangement (4*) form the locking element 2*.

5. Arrangement according to one of the claims 1 to 4
**characterised in**
**that** the locking element is straight or curved in shape.

6. Arrangement according to one of the claims 1 to 5
**characterised in**
**that** the elongated body has a round cross section.

7. Arrangement according to claim 6
**characterised in**
**that** for a straight elongated body with a round cross section, the locking element (2', 2'', 2''', 2*) is located inside a sleeve (40) which is engaged by the hooked part of the locking hook to close the lock and which is arranged to turn on the locking element.

8. Arrangement according to claim 6
**characterised in**
**that** the sleeve (40) is coated with a layer of anti-friction material, in particular a paint containing graphite or PTFE (Teflon).

9. Arrangement according to one of the claims 1 to 8
**characterised in**
**that** the plastic body (50) has two projections (53, 54) at a distance from one another, between the ends of which the locking element (55) is located.

10. Adjustable arrangement with a locking element according to one of the claims 1 to 9
**characterised in**
**that** the plastic body 50 can be attached to an imaginary component in a selectable engaging position in direction (+R) towards the imaginary locking hook or in the contrary direction (-R),
**that** the plastic body 50 has engaging grooves (G) adjacent to one another and at right angles to the direction +/- R,
**that** an engaging element (51) guided (50-1) in direction +/- R may be arranged in the plastic body (50),
which also has engaging grooves (E) adjacent to one another and at right angles to the direction +/- R,
where the engaging grooves (G, E) of the plastic body (50) and the engaging element (51) can hook into one another,
**that** the plastic body (50) may be raised, lowered or moved in direction +/- R with reference to the engaging element (51) to select an engaging position in an area (50-1) limited by the catch.

11. Arrangement according to claim 10,
**characterised in**
**that** to attach the plastic body (50) and the engaging element (51) to the imaginary component, a releasable connection by means of a stud bolt is provided, where the stud bolt passes through a slot (50-2) in the plastic body (50) running in direction +/- R and through a correspondingly aligned hole (51-2) in the engaging element (51),
and **that** when a selected engaging position is reached, the plastic body (50) is prevented from lifting off the engaging element (51) by the tensioned stud bolt.

## Revendications

1. Dispositif avec un élément de verrouillage pour un dispositif de verrouillage mécanique envisagé composé de l'élément de verrouillage et d'un crochet de verrouillage dont la partie en crochet peut être reliée à l'élément de verrouillage de façon à assurer le verrouillage,
**caractérisé en ce qu'**il est prévu un corps en forme de barre d'un seul tenant (4 ; 4' ; 4" ; 4"') qui se compose de zones en arc de cercle (4 ;4'-1, 4'-2 ; 4"-2, 4"-4 ; 4"-6, 4"-8 ; 4"'-2, 4"'- 4) et/ou de zones rectilignes (2' ; 4"-1, 4"-3 ; 4"-5, 4"-7, 4"-9),
**en ce que** l'élément de verrouillage est formé par un segment (2, 2', 2", 2''') ou par les deux zones d'extrémité (4"-1, 4"-9) du corps en forme de barre (4, 4', 4", 4"'),
**en ce qu'**il est prévu un élément en plastique (5) avec un creux (6) sur sa face frontale (F) orientée vers le crochet de verrouillage (3) envisagé,
**en ce que** l'élément de verrouillage (2, 2', 2", 2''') est disposé en vue de verrouiller le crochet dans le creux (6) de l'élément en plastique (5) sur ou près de sa face frontale (F),
**en ce que** les zones du corps en forme de barre (4, 4', 4", 4"') situées en dehors de l'élément de verrouillage (2, 2', 2", 2"') sont en majeure partie incluses dans l'élément en plastique (5),
l'une au moins de ces zones incluses (4'-1, 4'-2 ; 4"-3, 4"-7 ; 4"'-3 ) présentant une orientation (v ; v' ; v" ; v''') s'éloignant de la face frontale (F) et dirigée vers l'intérieur de l'élément en plastique (5),
et **en ce que** le creux (6) est suffisamment grand pour permettre à la partie en crochet du crochet de verrouillage (3) de se mettre en prise sur l'élément de verrouillage (2, 2', 2", 2"').

2. Dispositif avec un élément de verrouillage pour un dispositif de verrouillage mécanique envisagé composé de l'élément de verrouillage et d'un crochet de verrouillage dont la partie en crochet peut être reliée à l'élément de verrouillage de façon à assurer le verrouillage,
**caractérisé en ce qu'**il est prévu une disposition de corps en forme de barre en deux parties (4*) dans laquelle chaque partie (4*-1, 4*-2) se compose de zones en arc de cercle (4*-1-2 ; 4*-2-2 ) et/ou de zones rectilignes (4*-1-1 ; 4*-1-3 ; 4*-2-1 ; 4*-2-3),
**en ce que** l'élément de verrouillage (2*) est formé par un segment (4*-1-1, 4*-2-1) de la zone d'extrémité de chacune des deux parties (4*-1, 4*-2) de la disposition de corps en forme de barre (4*),
**en ce qu'**il est prévu un élément en plastique (5) avec un creux (6) sur sa face frontale (F) orientée vers le crochet de verrouillage,
**en ce que** l'élément de verrouillage (2*) est disposé en vue du verrouillage du crochet dans le creux (6) de l'élément en plastique (5) sur ou près de sa face frontale (F),
**en ce que** les zones des deux parties situées en dehors de la disposition d'élément de verrouillage (2*) sont en majeure partie incluses dans l'élément en plastique,
l'une au moins de ces zones (4*-1-2 ; 4*-2-2) de chaque partie (4*-1, 4*-2) présentant une orientation (D*) s'éloignant de la face frontale (F) et dirigée vers l'intérieur de l'élément en plastique (5),
et **en ce que** le creux est suffisamment grand pour permettre à la partie en crochet du crochet de verrouillage de se mettre en prise sur l'élément de verrouillage (2*).

3. Dispositif selon la revendication 1, **caractérisé en ce que** le corps en forme de barre en une partie (4 ; 4', 4", 4"') présente une forme fermée ou ouverte.

4. Dispositif selon la revendication 1 ou 2, **caractérisé en ce que** les deux zones d'extrémité (4"-1, 4"-9) du corps en forme de barre en une partie (4") forment l'élément de verrouillage (2"),
ou **en ce que** les zones d'extrémité (4*-1-1, 4*-2-1) de chacune des deux parties (4'-1, 4*-2) de la disposition de corps en forme de barre en deux parties (4*) forment l'élément de verrouillage (2*).

5. Dispositif selon l'une des revendications 1 à 4, **caractérisé en ce que** l'élément de verrouillage a une forme rectiligne ou courbe.

6. Dispositif selon l'une des revendications 1 à 5, **caractérisé en ce que** le corps en forme de barre présente une section circulaire.

7. Disposition selon la revendication 6, **caractérisé en ce que** pour un corps en forme de barre de section circulaire et de forme rectiligne, l'élément de verrouillage (2',2", 2''', 2*) est disposé à l'intérieur d'une douille (40) qui peut être reliée à la partie en crochet pour assurer le verrouillage et qui est disposée avec possibilité de rotation sur l'élément de verrouillage.

8. Dispositif selon la revendication 7, **caractérisé en ce que** la douille (40) est revêtue d'une couche de glissement, en particulier d'une couche de peinture contenant du graphite
ou du PTFE (Téflon).

9. Dispositif selon l'une des revendications 1 à 8, **caractérisé en ce que** l'élément en plastique (50) présente deux saillies (53, 54) distantes l'une de l'autre, entre les extrémités desquelles l'élément de verrouillage (55) est disposé.

10. Dispositif réglable avec un élément de verrouillage selon l'une des revendications 1 à 9, **caractérisé en ce que**
l'élément en plastique (50) peut être fixé dans une position d'engagement sélectionnable dans la direction (+R) allant vers le crochet de verrouillage envisagé ou la direction opposée (-R) sur un composant envisagé,
**en ce que** l'élément en plastique (50) présente des rainures d'engagement (G) contiguës perpendiculaires à la direction +/-R,
**en ce que** l'élément en plastique (50) peut recevoir un élément d'engagement (51) guidé (50-1) dans la direction +/-R,
qui présente également des rainures d'engagement (E) perpendiculaires à la direction +/-R,
les rainures (G, E) de l'élément en plastique (50) et de l'élément d'engagement (51) pouvant se mettre en prise les unes dans les autres,
**en ce que** l'élément en plastique (50) peut être soulevé ou abaissé par rapport à cet élément d'engagement (51) pour sélectionner une position d'engagement dans une zone limitée par une butée (50-1) et coulisser dans la direction +/- R.

11. Dispositif selon la revendication 10, **caractérisé en ce que** pour la fixation de l'élément en plastique (50) et de l'élément d'engagement (51), il est prévu sur le composant envisagé un vissage avec un boulon fileté pouvant être défait, lequel boulon fileté passe à travers un trou oblong (50-2) de l'élément en plastique (50) orienté dans la direction +/-R et à travers un alésage (51-2) orienté vers celui-ci dans l'élément d'engagement (51),
et **en ce que** lorsqu'une position d'engagement choisie est prise, le boulon fileté serré empêche l'élément en plastique (50) de se soulever de l'élément d'engagement (51).
